# EUROPÄISCHE PATENTSCHRIFT

(11) **EP 1 074 176 B1**
(45) Veröffentlichungstag und Bekanntmachung des Hinweises auf die Patenterteilung: **28.04.2004**
(21) Anmeldenummer: 00115972.2
(22) Anmeldetag: 26.07.2000
(51) Int. Cl.: A01F 12/40

(54) **Strohhäcksler**
Straw chopper
Hache-paille

(30) Priorität: 06.08.1999 US 369654
(43) Veröffentlichungstag der Anmeldung: 07.02.2001
(73) Patentinhaber: DEERE & COMPANY, Moline, Illinois 61265-8098 (US)
(72) Erfinder: Grywacheski, Sheldon Joseph, Eldridge, IA 52748 (US); Benhart, Michael Dwain, Rock Island, IL 61201 (US)
(74) Vertreter: Holst, Sönke, Dr.

(56) Entgegenhaltungen:
- EP-A- 0 224 803
- DE-A- 3 119 954
- DE-B- 1 057 375
- FR-A- 2 075 422
- FR-A- 2 108 333

## Beschreibung

Die Erfindung betrifft einen Mähdrescher mit einem Häcksler zum Häckseln von Erntegutresten, insbesondere Stroh, die von dem Mähdrescher ausgeworfen werden, wobei der Häcksler einen vorzugsweise um eine quer verlaufende Achse drehbaren Rotor und ein Gehäuse mit einem Einlass und einem Auslass aufweist und der Rotor in dem Gehäuse angeordnet ist, der Häcksler um eine quer zur Vorwärtsfahrtrichtung verlaufende Achse schwenkbar am Mähdrescher angebracht ist, so dass er zwischen einer Häcksel-Position, in der der Einlass vom Mähdrescher mit Erntegutresten beaufschlagt wird, und einer Schwadablage-Position bewegbar ist, in der die Erntegutreste aus dem Mähdrescher auf den Erdboden fallen, ohne das Gehäuse zu passieren.

Bei einem typischen Mähdrescher werden von der Trenneinrichtung kommende Erntegutreste, die auch als Stroh bezeichnet werden, an dem haubenartigen Aufbau an der Rückseite des Mähdreschers ausgeworfen. Das Stroh ist bereits von den Dresch- und Trennoperationen etwas in seiner Größe reduziert. Wenn es gewünscht wird, die Größe des Strohs weiter zu vermindern, wird es durch einen Strohhäcksler geleitet. Bei gegenwärtigen landwirtschaftlichen Verfahrensweisen, die die Bearbeitung des Bodens vor der Aussaat vermindern oder ganz entfallen lassen, ist es angebracht, das Stroh in viele kleine Teilchen zu häckseln und dann das gehäckselte Stroh über eine weite Fläche zu verteilen, im allgemeinen entsprechend der Breite des Schneidwerks. Da die Breite der Schneidwerke vergrößert wurde, wurde es notwendig, eine größere Breite bei der Verteilung des Strohs an der Rückseite des Mähdreschers bereitzustellen.

Strohhäcksler werden an der Rückseite von Mähdreschern benutzt, um das Stroh in kleine Teilchen zu häckseln und das gehäckselte Stroh über eine breite Fläche zu verteilen. Der häufigste Typ von Strohhäckslern besteht aus einem quer angebrachten Rotor mit Schlegeln, der mit einer quer verlaufenden Reihe von festen Schneiden zusammenwirkt, die in einem Gehäuse angebracht sind. Das Gehäuse hat eine Einlassöffnung und ist nahe der Haube des Mähdreschers aufgehängt, so dass es in den Strohfluss von der Trenneinrichtung eingefügt ist. Bei manchen Erntebedingungen, oder wenn das Stroh zum späteren Aufsammeln länger bleiben soll, ist es wünschenswert, das Stroh auf dem Boden in einem schmalen Schwad unmittelbar hinter der Haube des Mähdreschers abzulegen, ohne das Stroh durch den Häcksler zu leiten oder es weit zu verstreuen.

Eine Befestigung eines Strohhäckslers ist in der US 4 669 489 A gezeigt, in der ein rückseitig angebrachter Strohhäcksler das Stroh von den Strohschüttlern des Mähdreschers empfängt und gehäckseltes Stroh nach hinten auswirft. Der Häcksler ist verschiebbar auf einem Paar beabstandeter, längs orientierter Führungsschienen abgestützt, so dass der Häcksler von einer rückwärtigen Häcksel-Position in eine vorderseitige Schwadablage-Position verbracht werden kann, in der Stroh den Häcksler umgeht, indem es vom Mähdrescher hinter dem Häcksler fallen gelassen wird. Die Bewegung des Häckslers auf den Führungsschienen wird durch Anbringung eines Zusammenbaus mit einer quer verlaufenden Welle und Ritzeln an das Gehäuse des Häckslers erleichtert. Zähne der Ritzel greifen in längs beabstandete Öffnungen in den Führungsschienen ein. Bei Drehung der Welle wirken die Ritzel und die Führungsschienen nach Art eines Zahnstangenantriebs zusammen, um den Häckslerzusammenbau entlang der Führungsschiene anzutreiben, wobei der Häckslerzusammenbau in rechtwinkliger Ausrichtung gehalten wird. Die Welle wird durch einen Schlüssel gedreht, der in Schlüsselflächen an einem Ende der Welle eingreift.

Andere Strohhäcksler sind in einer festen Position an den Seitenwänden des Mähdreschers angebracht und verwenden bewegbare Leitbleche oder Türen, um das Stroh entweder in den Häcksler oder direkt auf den Boden zu Schwadablage zu leiten. Bei einem fest positionierten Häcksler beschränkt der Häcksler den Zugang zur Rückseite des Mähdreschers bei Wartungs- oder Reinigungsarbeiten.

Die DE 31 19 954 A offenbart einen Häcksler, dessen Rahmen am Mähdrescher um eine waagerechte Schwenkachse in die Betriebsstellung in die Betriebsstellung oder nach hinten und oben in eine Außerbetriebsstellung schwenkbar ist. Dadurch kann das Stroh in der Betriebsstellung gehäckselt und in der Außerbetriebsstellung in einem Schwad auf dem Feld abgelegt werden. Die dem Einlass des Häckslers benachbarten stationären Rahmenteile des Mähdreschers erschweren den Zugang zum Inneren des Mähdreschers im Bereich des Strohabwurfs.

Ein Mähdrescher mit einem um eine horizontale, quer zur Fahrtrichtung verlaufende Schwenkachse schwenkbaren Häcksler wird auch in der FR 2 108 333 A beschrieben. In der Außerbetriebsstellung ist der Häcksler jedoch nach vorn verlagert. Auch hier ist ein Zugang zum Inneren des Mähdreschers in der Nähe des Häckslers problematisch.

Die der Erfindung zugrunde liegende Aufgabe wird darin gesehen, einen Mähdrescher bereitzustellen, der einen Häcksler aufweist, der leicht von einer Häcksel-Position in eine Schadablage-Position verbringbar ist, und bei dem ein Zugang zur Rückseite des Mähdreschers zu Wartungszwecken möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das Gehäuse des Strohhäckslers ist schwenkbar an den Seitenwänden des Mähdreschers um eine quer zur Vorwärtsfahrtrichtung verlaufende Achse schwenkbar befestigt. Es wird eine Einlasstür vorgeschlagen, die an den Seitenwänden des Mähdreschers befestigt ist und vom hinteren Ende des Siebkastens ausgehend nach hinten und unten geneigt orientiert ist. Die Einlasstür leitet sowohl Stroh als auch Spreu in den Häcksler. Die Einlasstür ist schwenkbar am Mähdrescher befestigt, so dass sie von der geneigten Position in eine vertikale Position verbracht werden kann, um den Zugang zur Rückseite des Mähdreschers weiter zu verbessern, wenn der Häcksler in der Schwadablage-Position ist.

Das Gehäuse des Häckslers wird vorzugsweise von einer Häcksel-Position nach oben und hinten in eine Schwadablage-Position gedreht. Stroh kann in der Schwadablage-Position vor dem Häcksler aus dem Mähdrescher auf den Boden fallen.

Außerdem kann die Einlasstür nach oben in eine im wesentlichen horizontale, sich nach hinten erstreckende Position gedreht werden, um einen bequemen Zugang zu einem an der Hinterachse des Mähdreschers angebrachten Zughaken zu ermöglichen.

Weiterhin wird ein angetriebenes Betätigungsorgan empfohlen, um das Gehäuse des Häckslers zwischen der Häcksel- und der Schwadablage-Position zu transportieren. Das angetriebene Betätigungsorgan ist vorzugsweise ein elektromotorisch angetriebener Spindeltrieb. Ein Schalter kann an der Seite des Mähdreschers vorgesehen werden, um dem Bediener zu ermöglichen, das Gehäuse des Häckslers mittels elektrischer Energie anzuheben oder abzusenken. Der Motor des Mähdreschers muss nicht laufen, um das Gehäuse des Häckslers zu bewegen.

Wenn das Gehäuse des Häckslers in der Schwadablage-Position ist, greift vorzugsweise ein Riegel selbsttätig ein, um das Gehäuse des Häckslers am Aufbau des Mähdreschers zu arretieren, und nimmt damit die Last vom Betätigungsorgan weg.

In den Zeichnungen ist ein nachfolgend näher beschriebenes Ausführungsbeispiel der Erfindung dargestellt. Es zeigt:
- Fig. 1: eine Seitenansicht eines Mähdreschers mit einem erfindungsgemäßen Häcksler;
- Fig. 2: eine vergrößerte Seitenansicht des hinteren Bereichs des Mähdreschers, wobei der Häcksler in einer Häcksel-Position ist;
- Fig. 3: eine vergrößerte Seitenansicht des hinteren Bereichs des Mähdreschers, wobei der Häcksler in einer Schwadablage-Position ist;
- Fig. 4: eine vergrößerte Seitenansicht des Riegels zum Halten des Gehäuses in der der Schwadablage-Position, wobei der Riegel eingerastet ist;
- Fig. 5: eine vergrößerte Seitenansicht des Riegels zum Halten des Gehäuses in der der Schwadablage-Position, wobei der Riegel gelöst ist;
- Fig. 6: eine perspektivische Ansicht einer den Stift des Riegels tragenden Klammer.

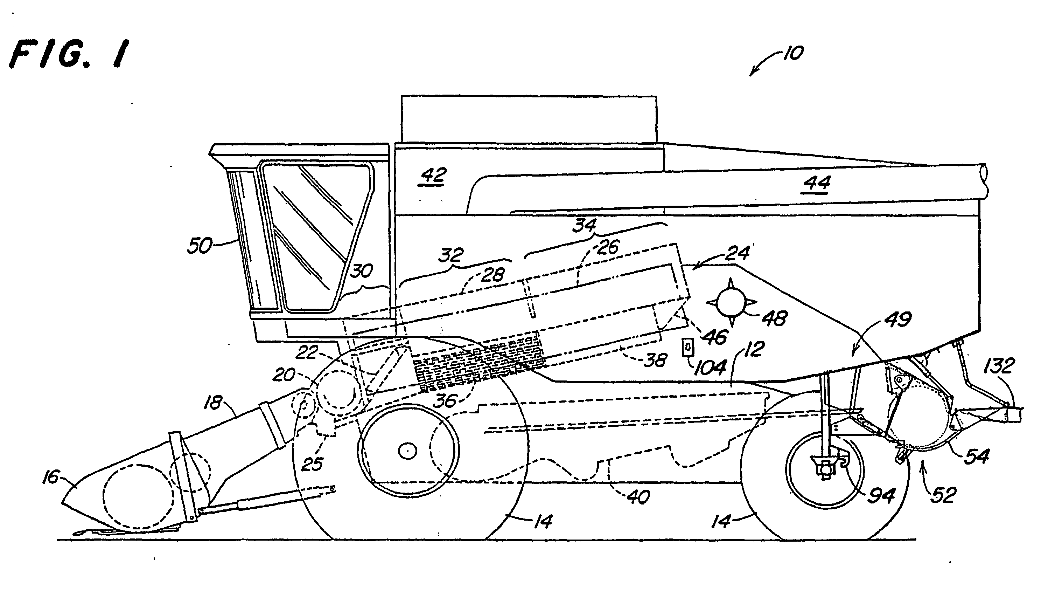

In Figur 1 ist ein landwirtschaftlicher Mähdrescher 10 gezeigt. Der Mähdrescher 10 weist unter anderem einen von einem Paar senkrechter Seitenwände 12 gebildeten Trägeraufbau auf, von denen in Figur 1 nur eine gezeigt ist, und im Eingriff mit dem Boden befindliche Räder 14. Ein Schneidwerk 16 wird verwendet, um Gut zu ernten und es einem Schrägförderer 18 zuzuführen. Das geerntete Gut wird durch den Schrägförderer 18 einer Leittrommel 20 zugeführt. Die Leittrommel 20 leitet das Gut nach oben, durch den Einlassübergangsbereich 22 in eine drehbare Gutbearbeitungseinheit 24. Eine Steinfalle 25 ist zwischen dem Schrägförderer 18 und der Leittrommel 20 positioniert. Im folgenden beziehen sich Richtungsangaben (wie vor, hinter etc.) auf die Vorwärtsfahrtrichtung des Mähdreschers 10.

Die drehbare Gutbearbeitungseinheit 24 drischt und trennt das geerntete Gut. Sie umfasst einen Rotor 26, der radial von einem Gehäuse 28 umhüllt wird. Der Rotor und das Gehäuse 28 definieren gemeinsam einen Einlassbereich 30, einen Dreschbereich 32 und einen Trennbereich 34. Der Rotor 26 umfasst eine hohle, zylindrische Trommel mit einer Vielzahl von Gutbearbeitungselementen, die in das Gut eingreifen und es in dem Gehäuse 28 drehen. Der Boden des Gehäuses 28 hat einen Dreschkorb 36 unter dem Dreschbereich 32 und ein Trennrost 38 unter dem Trennbereich 34.

Korn und Spreu, die durch den Dreschkorb 36 und das Trennrost 38 fallen, werden einer Reinigungseinrichtung 40 zugeführt. Die Reinigungseinrichtung entfernt die Spreu und führt das saubere Korn einem Elevator (nicht gezeigt) für sauberes Korn zu. Der Elevator für sauberes Korn legt das saubere Korn in einem Korntank 42 ab. Das saubere Korn im Korntank 42 kann durch einen Entladeschneckenförderer 44 auf einen Anhänger oder Lastwagen entladen werden.

Ausgedroschenes und von Korn getrenntes Stroh wird von der drehbaren Gutbearbeitungseinheit 24 durch einen Auslass 46 zu einer Abgabetrommel 48 ausgeworfen. Die Abgabetrommel 48 fördert das Stroh nach unten und hinten durch eine Ausgabeöffnung 49 an oder nahe der Rückseite des Mähdreschers 10. Der Betrieb des Mähdreschers 10 wird von einer Bedienerkabine 50 aus gesteuert.

An den Seitenwänden 12 ist an dem hinteren unteren Ende des Mähdreschers 10 ein Häcksler 52 befestigt. Der Häcksler 52 umfasst ein Häckslergehäuse 54, das einen Rotor 56 um eine quer verlaufende Achse drehbar haltert. Das Gehäuse 54 umhüllt den Rotor 56 im wesentlichen. Ein nicht gezeigter Riemenantrieb wird benutzt, um den Rotor 56 zu drehen. Eine Vielzahl von Schneiden 58 oder Hämmern sind am Rotor 56 angebracht und laufen zwischen einer Reihe stationärer Messer 60 hindurch, die am Gehäuse 54 befestigt sind. Die Schneiden 58 können unter einer Vielzahl von Typen ausgewählt werden. Bevorzugt ist eine Gebläseschneide, die einen Flügelabschnitt an der nachlaufenden Kante des Schneidenabschnitts aufweist, welcher gegenüber dem Schneidenabschnitt rechtwinklig nach außen abgeknickt ist, um eine Gebläsewirkung zwecks Erleichterung der Ablage des gehäckselten Strohs zu erleichtern. Eine derartige Schneide ist in der US 5 482 508 A gezeigt. Die Messer 60 werden von Flanschen 61 an jeder Seite des Gehäuses 54 getragen. Die stationären Messer 60 können tiefer in das Gehäuse 54 des Häckslers 52 eingebracht oder aus dem Gehäuse 54 herausgezogen werden, um den Häckselgrad des Strohs zu ändern.

Eine Befestigungsplatte 62 verbindet das Gehäuse 54 mit einer Seitenwandverlängerungsplatte 64 an einem Schwenkpunkt 66. Die Seitenwandverlängerungsplatte 64 erstreckt sich von der Seitenwand 12 nach unten. Jeweils eine Befestigungsplatte 62 und eine Seitenwandverlängerungsplatte 64 ist an jeder Seite des Mähdreschers 10 bereitgestellt. Das Gehäuse 54 kann um die Achse 68 des Schwenkpunkts 66 rotieren, welche sich quer zum Mähdrescher 10 erstreckt.

Die Vorderseite des Gehäuses 54 ist offen, so dass ein Einlass 70 in das Gehäuse 54 gebildet ist. Das Gehäuse 54 definiert weiterhin einen rückseitigen Auslass 72, um gehäckseltes Stroh durch ihn auszuwerfen.

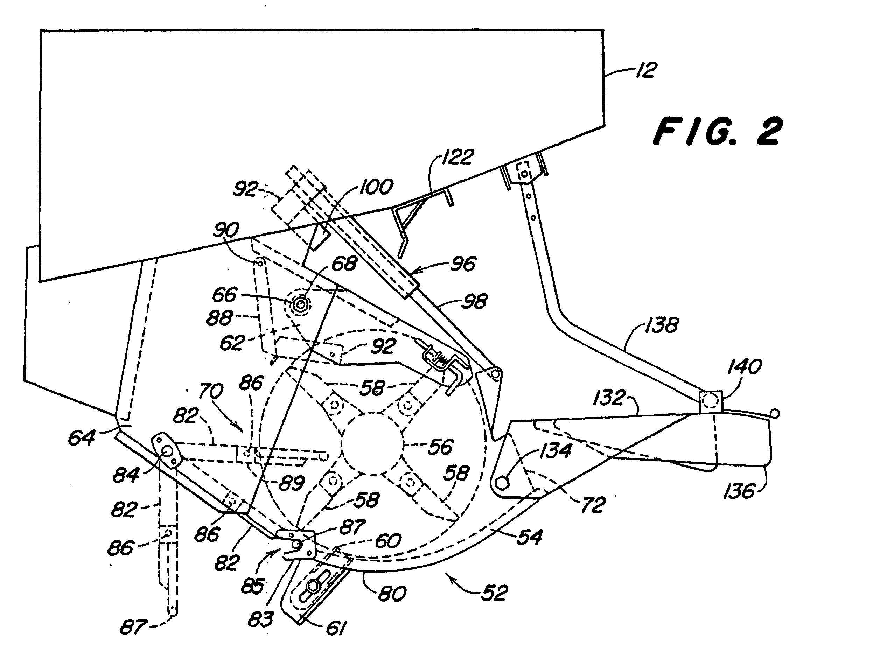

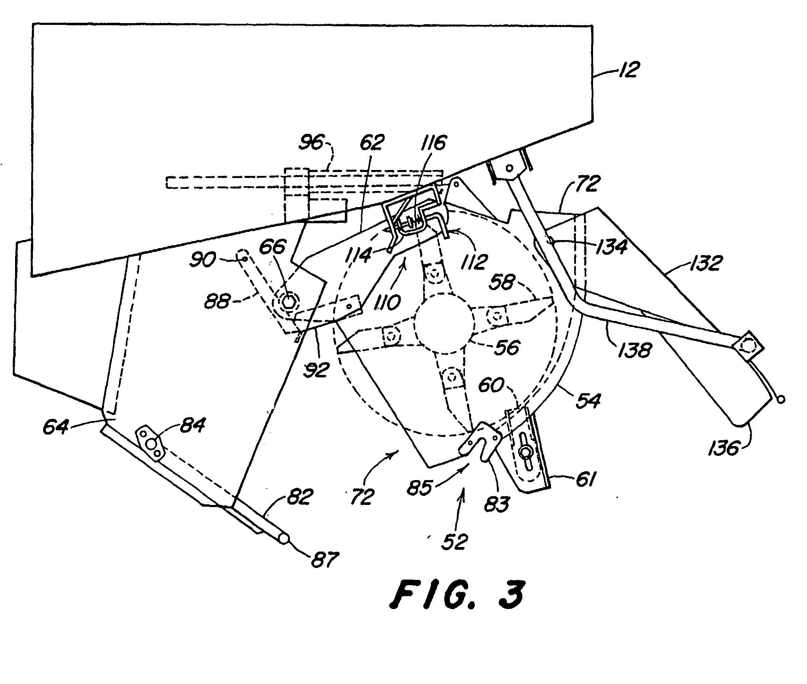

Das Gehäuse 54 des Häckslers 52 wird von einer Häcksel-Position, wie sie in Figur 2 dargestellt ist, in eine in Figur 3 wiedergegebene Schwadablage-Position verbracht. In der Häcksel-Position liegt das vordere Ende der unteren Platte 80 des Gehäuses 54 an der nachlaufenden Kante einer Einlasstür 82 des Häckslers 52 an. Die Einlasstür 82 erstreckt sich über die Breite des Mähdreschers 10 und ist an Schwenkpunkten 84 schwenkbar an den Seitenverlängerungsplatten 64 befestigt. Das Gehäuse 54 des Häckslers 52 umfasst einen Flansch 83 mit einem offenen Schlitz 85 an jeder lateralen Seite. Der Schlitz 85 nimmt einen Stift 87 auf, der an jeder Seite der Einlasstür 82 übersteht, wenn das Gehäuse 54 in der Häcksel-Position ist. Dadurch wird eine korrekte Ausrichtung des Gehäuses 54 mit der Einlasstür 82 sicher gestellt. Ein herausziehbarer Stift 86 hält die Einlasstür 82 in einer Position, die vom Schwenkpunkt 84 nach unten und hinten geneigt ist. Der Schwenkpunkt 84 ist im wesentlichen nahe des rückwärtigen Endes des Obersiebs angeordnet, wobei die Einlasstür 82 sowohl Stroh als auch Spreu in das Gehäuse 54 des Häckslers 52 leitet.

Die Einlasstür 82 ist schwenkbar am Mähdrescher 10 befestigt, so dass die Einlasstür 82 von der geneigten Position in eine vertikale Position nach unten gedreht werden kann, um den Zugang zum rückwärtigen Bereich des Mähdreschers 10 weiter zu verbessern. Die Drehung der Einlasstür 82 wird durch Herausziehen der Stifte 86 aus den Seitenwänden 12 des Mähdreschers 10 bewerkstelligt, um die Einlasstür 82 freizusetzen, so dass sie um den Schwenkpunkt 84 rotieren kann. Zusätzlich kann die Einlasstür 82 nach oben in eine im wesentlichen senkrechte, sich nach hinten erstreckende Position (Figur 2) gedreht und durch Einsetzen der Stifte 86 in Öffnungen 89 in den Seitenwandverlängerungsplatten 64 an Ort und Stelle festgesetzt werden. In dieser Position ist ein bequemer Zugang zu einem an der Hinterachse des Mähdreschers befestigten Zughaken 94 (Figur 1) bereitgestellt.

Ein Einlassdeflektor 88 in Form einer Platte erstreckt sich zwischen den beiden Seitenwandverlängerungsplatten 64 und ist schwenkbar am Schwenkpunkt 90 befestigt. Der Einlassdeflektor 88 verhindert, das Erntegutreste in den oberen Bereich des Gehäuses 54 des Häckslers 52 eintreten, in dem die drehenden Schneiden 58 die Erntegutreste nach vorn in das Obersieb fördern können. Erntegutreste, wie Maiskolben, können das Obersieb beschädigen, wenn sie durch den Häcksler 52 in das Obersieb geworfen werden. Der Einlassdeflektor 88 ist mit dem Gehäuse 54 des Häckslers 52 beidseitig durch Verbindungen 92 verbunden. Wenn das Gehäuse 54 des Häckslers 52 nach oben und hinten in die Schwadablage-Position bewegt wird, veranlassen die Verbindungen 92 den Einlassdeflektor 88, sich nach hinten und oben zu drehen, so dass ein größerer Zugang zur Rückseite des Mähdreschers 10 und Raum zum Herausziehen der Elemente des Obersiebs und Untersiebs aus dem Siebkasten nach hinten bereitgestellt ist.

Ein angetriebenes Betätigungsorgan 96 erstreckt sich zwischen dem Gehäuse 54 des Häckslers 52 und dem Aufbau des Mähdreschers 10, um das Gehäuse 54 des Häckslers 52 anzuheben und abzusenken. Das Betätigungsorgan 96 umfasst einen Spindelantrieb 98, der von einem Elektromotor 100 über ein Getriebe 102 angetrieben wird. Ein Kippschalter 104 an der Seite des Mähdreschers 10, Figur 1, wird benutzt, um den Elektromotor 100 zum Antrieb des Betätigungsorgans 96 zu betätigen. Durch die Verwendung eines elektrisch angetriebenen Betätigungsorgans 96 kann das Gehäuse 54 des Häckslers 52 zwischen der Häcksel- und der Schwadablage-Position bewegt werden, ohne dass der Motor des Mähdreschers 10 in Betrieb ist. Ein hydraulischer Zylinder kann auch verwendet werden, um das Gehäuse 54 des Häckslers 52 zu bewegen; dabei wäre jedoch ein Betrieb des Motors des Mähdreschers 10 nötig, um den Druck der Hydraulikflüssigkeit bereitzustellen. Andere mechanische Antriebe können ebenfalls verwendet werden, einschließlich Gestängen und Zahnradtrieben.

Ein Riegel 110 ist an jeder Seite des Gehäuses 54 des Häckslers 52 bereitgestellt, um das Gehäuse 54 am Aufbau des Mähdreschers anzubringen, wenn es in die Schwadablage-Position angehoben ist. Durch das Verriegeln des Gehäuses 54 des Häckslers 52 in der angehobenen Position muss das Gewicht des Gehäuses 54 nicht vom angetriebenen Betätigungsorgan 96 aufgenommen werden, sobald das Gehäuse 54 des Häckslers 52 in der Schwadablage-Position ist. Der Riegel 110 umfasst an jeder Seite des Gehäuses 54 des Häckslers 52 einen L-förmigen Stift 112, der von einer Klammer 114 getragen wird. Eine Feder 116 spannt den Stift 112 bezüglich der Figuren nach links vor. Wenn das Gehäuse 54 des Häckslers 52 angehoben wird, greift das kugelförmige Ende 118 des Stifts 112 in den abgewinkelten Endbereich 120 einer Klammer 122 ein, die an den Seitenwänden 12 des Mähdreschers 10 befestigt ist. Der Endbereich 120 der Klammer 122 bedingt, dass der Stift 112 sich gegen die Vorspannung der Feder 116 bewegt. Wenn das Gehäuse 54 des Häckslers 52 die Schwadablage-Position erreicht, wird der Stift 112 durch eine Öffnung 124 in der Klammer 122 einrasten und das Gehäuse 54 des Häckslers 52 in der Schwadablage-Position am Aufbau des Mähdreschers 10 arretieren.

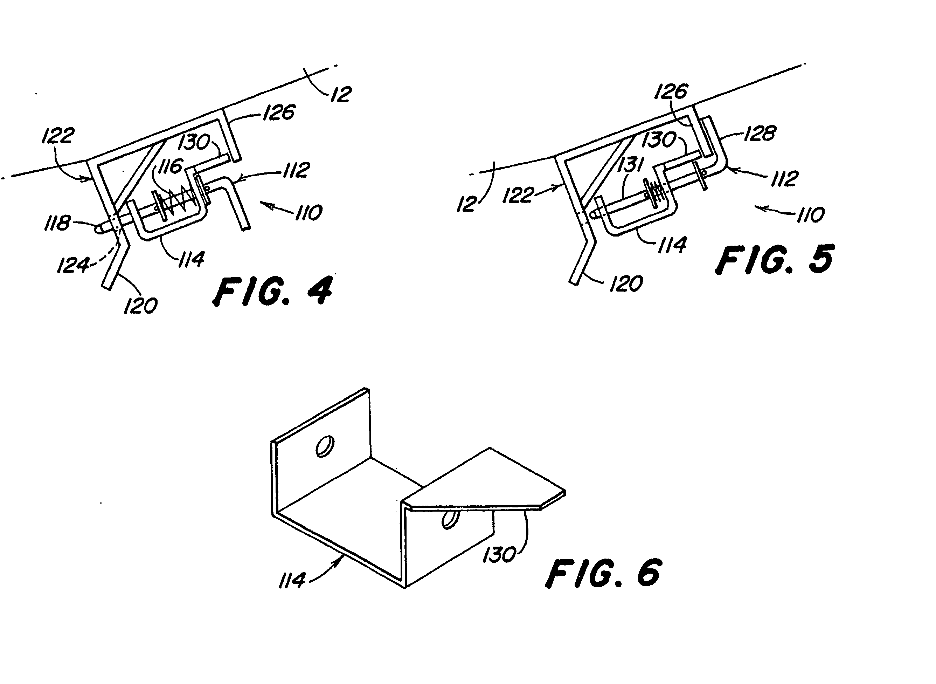

Bevor das Gehäuse 54 des Häckslers 52 abgesenkt werden kann, muss der Bediener zuerst den Stift 112 an jeder Seite des Häckslers 52 entriegeln. Der Stift 112 wird aus der Öffnung 124 herausgezogen und in der herausgezogenen Stellung (Figur 5) gehalten, indem das Bein 128 des Stifts 112 an dem nach unten gerichteten Flanschabschnitt 126 der Klammer 122 in Anlage gebracht wird. Wenn das Gehäuse 54 des Häckslers 52 anfängt, sich nach unten zu bewegen, wird der Stift 112 den nach unten gerichteten Flanschabschnitt 126 der Klammer 122 verlassen. Sobald das passiert, wird die Feder 116 den Stift 112 nach vorn vorspannen. Das bedingt, dass das Bein 128 des Stifts 112 an der abgewinkelten Kante 130 der Klammer 114 anliegt. Das führt dazu, dass der Stift 112 sich um die Achse des Hauptbeins 131 des Stifts 112 dreht, so dass das Bein 128 nach außen oder unten zeigt. Dadurch wird eine störende Beeinflussung zwischen dem Bein 128 und dem nach unten gerichteten Flanschabschnitt 126 der Klammer 122 verhindert, wenn das Gehäuse 54 des Häckslers 52 wieder angehoben wird.

Eine Verteilerhaube 132 ist an einem Schwenkpunkt 134, Figur 2, schwenkbar am Gehäuse 54 gelagert. Die Verteilerhaube 132 hat eine Vielzahl an Leitblechen 136, um das austretende, gehäckselte Stroh seitlich über eine hinreichende Breite zu verteilen. Die Position der Leitbleche 136 ist einstellbar, um die Breite der Strohverteilung zu verändern. Eine Schwenkleiste 138 ist drehbar an beiden Seitenwänden 12 angebracht. Die Schwenkleiste 138 ist auch in Lagerungen 140 drehbar an die Verteilerhaube 132 gekoppelt. Wenn das Gehäuse 54 des Häckslers 52 zwischen der Häcksel- und der Schwadablage-Position gedreht wird, bewirkt die Schwenkleiste 138, dass sich die Verteilerhaube 132 relativ zum Gehäuse 54 des Häckslers 52 um den Schwenkpunkt 134 dreht. Das ermöglicht der Verteilerhaube 132, sich zwischen der in Figur 2 gezeigten Betriebsposition und der in Figur 3 gezeigten Faltposition zu bewegen.

Der erfindungsgemäße Häcksler 52 stellt einen verbesserten Zugang zur Rückseite des Mähdreschers 10 zu Wartungs- und Servicezwecken bereit, indem das Gehäuse 54 um eine quer verlaufende Achse zwischen einer Häckselposition und einer rückwärtigen, angehobenen Schwadablage-Position verschwenkt wird. Zusätzlich erlaubt das elektrisch angetriebene Betätigungsorgan 96, das Gehäuse 54 des Häckslers 52 anzuheben und abzusenken, ohne dass ein Betrieb des Motors des Mähdreschers 10 nötig wäre. Weiterhin stellt die schwenkbare Einlasstür 82 einen verbesserten Zugang zur Rückseite des Mähdreschers 10 bereit, wie auch der schwenkbare Einlassdeflektor 88 an der Oberseite des Einlasses des Gehäuses 54 des Häckslers 52.

## Patentansprüche

1. Mähdrescher (10) mit einem Häcksler (52) zum Häckseln von Erntegutresten, insbesondere Stroh, die von dem Mähdrescher (10) ausgeworfen werden, wobei der Häcksler (52) einen vorzugsweise um eine quer verlaufende Achse drehbaren Rotor (56) und ein Gehäuse (54) mit einem Einlass und einem Auslass aufweist und der Rotor (56) in dem Gehäuse (54) angeordnet ist, der Häcksler (52) um eine quer zur Vorwärtsfahrtrichtung verlaufende Achse schwenkbar am Mähdrescher (10) angebracht ist, so dass er zwischen einer Häcksel-Position, in der der Einlass vom Mähdrescher (10) mit Erntegutresten beaufschlagt wird, und einer Schwadablage-Position bewegbar ist, in der die Erntegutreste aus dem Mähdrescher (10) auf den Erdboden fallen, ohne das Gehäuse (54) zu passieren, **dadurch gekennzeichnet, dass** eine Einlasstür (82) schwenkbar am Mähdrescher (10) befestigt und wahlweise in eine Position verbringbar ist, in der sie nach hinten und unten geneigt ist, um Erntegutreste in den Einlass des Gehäuses (54) zu leiten, und wahlweise in eine im wesentlichen vertikale Position verbringbar ist, in der sie sich nach unten erstreckt, um den Zugang zum rückseitigen Innenbereich des Mähdreschers (10) zu erleichtern.

2. Mähdrescher (10) nach Anspruch 1, **dadurch gekennzeichnet, dass** das Gehäuse (54) aus der Häcksel-Position um die Schwenkachse nach oben und hinten in die Schwadablage-Position gedreht wird, in der die Erntegutreste vor dem Gehäuse (54) auf den Erdboden fallen.

3. Mähdrescher (10) nach Anspruch 1 oder 2, **dadurch gekennzeichnet, dass** die Einlasstür (82) weiterhin wahlweise in eine im wesentlichen horizontale Position verbringbar ist, in der sie sich nach hinten erstreckt, wenn das Gehäuse (54) in der Schwadablage-Position ist, um den Zugang zum Mähdrescher (10) unterhalb der Einlasstür (82) zu erleichtern.

4. Mähdrescher (10) nach einem der Ansprüche 1 bis 3, **gekennzeichnet durch** ein angetriebenes Betätigungsorgan (96) zum Transport des Gehäuses (54) zwischen der Häcksel-Position und der Schwadablage-Position.

5. Mähdrescher (10) nach Anspruch 4, **dadurch gekennzeichnet, dass** das Betätigungsorgan (96) einen elektromotorisch angetriebenen Spindelantrieb (98) umfasst.

6. Mähdrescher (10) nach einem der Ansprüche 1 bis 5, **gekennzeichnet durch** einen Riegel (110), um das Gehäuse (54) mit dem Aufbau des Mähdreschers (10) zu verrasten, wenn das Gehäuse in der Schwadablage-Position ist.

7. Mähdrescher (10) nach Anspruch 6, **dadurch gekennzeichnet, dass** der Riegel (110) eine Platte (126) und einen federbelasteten Stift (112) aufweist, der selbsttätig verrastet und in die Platte (126) eingreift, wenn das Gehäuse in die Schwadablage-Position dreht.

8. Mähdrescher (10) nach einem der vorhergehenden Ansprüche, **gekennzeichnet durch** eine Verteilerhaube (132) mit Leitblechen (136), die am Gehäuse (54) nahe des Auslasses schwenkbar befestigt ist, und **durch** ein Gestänge mit dem Mähdrescher (10) gekoppelt ist, so dass die Verteilerhaube (132) relativ zum Gehäuse dreht, wenn das Gehäuse (52) zwischen der Häcksel-Position und der Schwadablage-Position gedreht wird.

9. Mähdrescher (10) nach einem der vorhergehenden Ansprüche, **gekennzeichnet durch** einen Einlassdeflektor (88), der am Mähdrescher (10) oberhalb des Einlasses des Gehäuses (54) schwenkbar befestigt ist, wobei eine Verbindung den Einlassdeflektor (88) mit dem Gehäuse (54) verbindet, so dass der Einlassdeflektor (88) nach oben und hinten verschwenkt wird, wenn das Gehäuse in die Schwadablage-Position verschwenkt wird.

## Claims

1. Combine harvester (10) having a chopper (52) for chopping crop residues, in particular straw, which have been ejected by the combine harvester (10), the chopper (52) having a rotor (56), which can rotate preferably about a transversely extending axis, and a housing (54) with an inlet and an outlet, and the rotor (56) being disposed in the housing (54), the chopper (52) being mounted on the combine harvester (10) pivotably about an axis which extends transversely relative to the forward travel direction, so that it is movable between a chopper position, in which the inlet of the combine harvester (10) is supplied with crop residues, and a windrowing position, in which the crop residues from the combine harvester (10) fall on the ground without passing through the housing (54), **characterised in that** an inlet door (82) is mounted pivotably on the combine harvester (10) and can optionally be brought into a position in which it is inclined rearwardly and downwardly, in order to guide crop residues into the inlet of the housing (54), and optionally can be brought into a substantially vertical position, in which it extends downwardly, in order to facilitate access to the rear-side interior region of the combine harvester (10).

2. Combine harvester (10) according to claim 1, **characterised in that** the housing (54) is rotated from the chopping position about the pivoting axis upwardly and rearwardly into the windrowing position, in which the crop residues fall on the ground in front of the housing (54).

3. Combine harvester (10) according to claim 1 or 2, **characterised in that** the inlet door (82) can furthermore optionally be brought into a substantially horizontal position, in which it extends rearwardly when the housing (54) is in the windrowing position, in order to facilitate access to the combine harvester (10) below the inlet door (82).

4. Combine harvester (10) according to one of the claims 1 to 3, **characterised by** a driven actuation member (96) for conveying the housing (54) between the chopping position and the windrowing position.

5. Combine harvester (10) according to claim 4, **characterised in that** the actuation member (96) comprises an electromotor-driven spindle drive (98).

6. Combine harvester (10) according to one of the claims 1 to 5, **characterised by** a bolt (110) in order to lock the housing (54) to the bodywork of the combine harvester (10) when the housing is in the windrowing position.

7. Combine harvester (10) according to claim 6, **characterised in that** the bolt (110) has a plate (126) and a resiliently loaded pin (112), which automatically locks and engages in the plate (126) when the housing rotates into the windrowing position.

8. Combine harvester (10) according to one of the preceding claims, **characterised by** a distributor hood (132) with guide plates (136) which is mounted pivotably on the housing (54) close to the outlet and is coupled to the combine harvester (10) by means of a rod assembly, so that the distributor hood (132) rotates relative to the housing when the housing (52) is rotated between the chopping position and the windrowing position.

9. Combine harvester (10) according to one of the preceding claims, **characterised by** an inlet deflector (88) which is mounted pivotably on the combine harvester (10) above the inlet of the housing (54), a connection connecting the inlet deflector (88) to the housing (54) so that the inlet deflector (88) is pivoted upwardly and rearwardly when the housing is pivoted into the windrowing position.

## Revendications

1. Moissonneuse-batteuse (10) comportant une hacheuse (52) pour hacher des restes de récolte, notamment de la paille, qui sont éjectés de la moissonneuse-batteuse (10), et dans laquelle la hacheuse (52) comporte un rotor (56) pouvant tourner de préférence autour d'un axe transversal, et un carter (54) comportant une entrée et une sortie, et le rotor (56) est disposé dans le carter (54), la hacheuse (52) est montée sur la moissonneuse-batteuse (10) de manière à pouvoir pivoter autour d'un axe qui s'étend transversalement par rapport à la direction d'avance, de telle sorte qu'il est déplaçable entre une position de hachage, dans laquelle l'entrée de la moissonneuse-batteuse (10) est chargée par des restes de récolte, et une position de dépôt d'andain, dans laquelle les restes de la récolte tombent de la moissonneuse-batteuse (10) sur le sol, sans traverser le carter (54), **caractérisée en ce qu'**une porte d'entrée (82) est fixée de manière à pouvoir pivoter sur la moissonneuse-batteuse (10) et peut être amenée au choix dans une position, dans laquelle elle est inclinée vers l'arrière et vers le bas pour diriger des restes de récolte dans l'entrée du carter (54) et peut être amenée au choix dans une position essentiellement verticale, dans laquelle elle s'étend vers le bas de manière à faciliter l'accès à la zone intérieure arrière de la moissonneuse-batteuse (10).

2. Moissonneuse-batteuse (10) selon la revendication 1, **caractérisée en ce que** le carter (54) pivote depuis la position de hachage vers le haut et vers l'arrière autour de l'axe de pivotement pour venir dans la position de dépôt d'andain, dans laquelle les restes de récolte tombent sur le sol en avant du carter (54).

3. Moissonneuse-batteuse (10) selon la revendication 1 ou 2, **caractérisée en ce que** la porte d'entrée (82) peut être en outre amenée au choix dans la position essentiellement horizontale, dans laquelle elle s'étend vers l'arrière, lorsque le carter (54) est dans la position de dépôt d'andain, de manière à faciliter l'accès à la moissonneuse-batteuse (10) au-dessous de la porte d'entrée (82).

4. Moissonneuse-batteuse (10) selon l'une des revendications 1 à 3, comprenant en outre un organe d'actionnement entraîné (96) pour le transport du carter (54) entre la position de hachage et la position de dépôt d'andain.

5. Moissonneuse-batteuse (10) selon la revendication 4, **caractérisée en ce que** l'organe d'actionnement (96) comprend un dispositif d'entraînement à broche (98) entraîné par un moteur électrique.

6. Moissonneuse-batteuse (10) selon l'une des revendications 1 à 5, comprenant en outre un verrou (110) servant à verrouiller le carter (54) à la structure de la moissonneuse-batteuse (10) lorsque le carter est dans la position de dépôt d'andain.

7. Moissonneuse-batteuse (10) selon la revendication 6, **caractérisée en ce que** le verrou (110) possède une plaque (126) et une tige (112) qui est chargée par un ressort et s'encliquète automatiquement et s'engage dans la plaque (126) lorsque le carter pivote pour venir dans la position de dépôt d'andain.

8. Moissonneuse-batteuse (10) selon l'une des revendications précédentes, comprenant en outre un capot de distributeur (132) comportant des chicanes (136) et qui est fixé sur le carter (54) de manière à pouvoir pivoter à proximité de la sortie, et couplé par une tringlerie à la moissonneuse-batteuse (10) de telle sorte que le capot (132) du distributeur tourne par rapport au carter lorsque le carter (52) pivote entre la position de hachage et la position de dépôt d'andain.

9. Moissonneuse-batteuse (10) selon l'une des revendications précédentes, comprenant en outre un déflecteur d'entrée (88), qui est fixé à la moissonneuse-batteuse (10) de manière à pouvoir pivoter au-dessus de l'entrée du carter (54), une unité de liaison reliant le déflecteur d'entrée (88) du carter (54) de telle sorte que le déflecteur d'entrée (88) est pivoté vers le haut lorsque le carter pivote pour venir dans la position.
